# EUROPEAN PATENT SPECIFICATION

(11) **EP 2 917 538 B1**
(45) Date of publication and mention of the grant of the patent: **14.11.2018**
(21) Application number: 13796172.8
(22) Date of filing: 11.09.2013
(51) Int. Cl.: F01N 9/00, F02D 9/06, F01N 3/10, F01N 3/023

(54) **METHOD AND SYSTEM FOR THE PROPULSION OF A VEHICLE**
VERFAHREN UND SYSTEM ZUM BETREIBEN EINES FAHRZEUGES
PROCÉDÉ ET SYSTÈME PERMETTANT LA PROPULSION D'UN VÉHICULE

(30) Priority: 27.09.2012 SE 1251090
(43) Date of publication of application: 16.09.2015
(73) Proprietor: Scania CV AB, 151 87 Södertälje (SE)
(72) Inventor: FRÖBERG, Magnus, 126 54 Hägersten (SE); PERSSON, Mikael, S-152 43 Södertälje (SE); ADLOUNI, Mohammed, S-241 33 Eslöv (SE); WINGREN, Anna, S-151 38 Södertälje (SE)
(74) Representative: Scania CV AB
(86) International application number: PCT/SE2013/051057
(87) International publication number: WO 2014/051496

(56) References cited:
- EP-A1- 1 559 879
- WO-A1-2010/110700
- US-A1- 2008 196 395
- US-A1- 2010 088 001
- US-A1- 2011 030 342

## Description

### Field of the invention

The present invention pertains to methods when driving vehicles, and in particular to a method when driving a vehicle comprising a system for after-treatment of an exhaust stream according to the preamble to patent claim 1. The invention also relates to a system and a vehicle, as well as a computer program and a computer program product, which implement the method according to the invention.

### Background of the invention

In connection with increased government interests concerning pollution and air quality, primarily in metropolitan areas, emission standards and regulations have been drafted in many jurisdictions.

Such emission regulations often consist of sets of requirements which define acceptable limits for exhaust emissions in vehicles equipped with combustion engines. For example, emission levels of nitrogen oxides (NOₓ), hydrocarbons (HC) and carbon monoxide (CO) are often regulated. These emission regulations usually also pertain to, at least in relation to certain types of vehicles, the presence of particles in exhaust emissions.

In an effort to meet these exhaust regulations, the exhausts caused by a combustion engine's combustion is after treated (purified). By way of example, a so-called catalytic purification process may be used, so that after-treatment systems in e.g. vehicles and other vessels usually comprise one or more catalysts.

Further, such after-treatment systems often comprise, alternatively or in combination with the one or several catalysts, other components. After-treatment systems in vehicles with diesel engines, for example, often comprise particulate filters.

In connection with combustion of fuel in the combustion engine's combustion chamber (e. g. cylinders) soot particles are formed. According to the above, there are emission regulations and standards also pertaining to these soot particles, and in order to comply with the regulations, particulate filters may be used to catch soot particles. In such cases, the exhaust stream is led e.g. through a filter structure where soot particles are caught from the exhaust stream passing through, for storage in the particulate filter. Thus, there are numerous methods to reduce emissions from a combustion engine.

The function in connection with treatment of exhaust streams is often controlled by chemical reactions, where the prevailing temperature has a great impact on the reaction speed, which means that the prevailing temperature on exhaust treatment may thus also have a great impact on the exhaust treatment's efficiency.

US 2010/0088001 A1 discloses a vehicle cruise control apparatus. An acceleration of the vehicle is detected, and an auxiliary brake force is applied in response to the acceleration in order to maintain a set vehicle speed.

### Summary of the invention

One objective of the present invention is to provide a method when driving a vehicle, which reduces the risk that the temperature falls to an undesirably low temperature in connection with after-treatment of an exhaust stream. This objective is achieved with a method according to patent claim 1. Furthermore, a vehicle according to claim 18 is provided. The present invention pertains to a method when driving a vehicle, where the said vehicle comprises a combustion engine and an exhaust system with an after-treatment system, for after-treatment of an exhaust stream resulting from the said combustion engine, where the said vehicle also comprises an exhaust brake system and at least one first auxiliary braking system separate from said exhaust brake system. The method comprises:
- on request for activation of said first auxiliary braking system, at least to activate said exhaust braking system.

As mentioned above, the vehicle comprises an after-treatment system, for after-treatment of an exhaust stream resulting from the combustion in a combustion engine, wherein this after-treatment is typically carried out in the form of chemical reactions. As is known, such chemical reactions may e.g. comprise oxidation of unburned fuel (hydrocarbons) and carbon oxides, conversion of nitrogen oxides to nitrogen dioxide, as well as general reduction of nitric oxide / nitrogen dioxide. These chemical reactions are all strongly dependent on temperature, and in order for the desired treatment of an exhaust stream to function as desired, the temperature in the after-treatment system may not fall to levels which are too low.

Further, if the temperature in the after-treatment system is low, sulphur which is normally contained in fuel such as e. g. diesel may react chemically with the active coating, often consisting of precious metals or other metals, which components in the after-treatment system usually comprise, so that the metal coating may become at least temporarily poisoned, when sulphur molecules, e.g. in the form of sulphates, are bound to the metal atoms / ions, and these metal atoms / ions may no longer participate in the desired chemical reactions, i.e. the component becomes poisoned by sulphur intercalation.

Thus it is desirable that the vehicle is driven in such a manner that the desired temperature in the after-treatment system is maintained, so that the desired treatment of the exhaust stream may thus be carried out.

However, there are driving situations where there is a risk that the temperature in the after-treatment system may fall to an undesirably low level. One such example consists of a situation where the vehicle is driven on a downhill slope, where the vehicle may be driven with a trailing combustion engine, i.e. with the fuel supply turned off, and where a cooling effect thus arises due to the combustion air which normally constitutes a part of the combustion, but which when trailing only passes through the combustion engine and further through the aftertreatment system and cools this.

If a sufficiently significant cooling of the after-treatment system arises, the after-treatment may, once the vehicle's ambient conditions are such that a torque from the combustion engine is requested with combustion of fuel as a result, have such a low temperature that the subsequent exhaust purification does not function optimally. In the worst case, a very low or no exhaust purification is obtained until the after-treatment system has been heated to such an extent, that the desired exhaust purification may be obtained.

According to the present invention, a method is provided to reduce such problems comprising cooling of the after-treatment system when e.g. driving a vehicle on downhill slopes and in other applicable situations, where a request for activation of an auxiliary braking system is made.

This is achieved according to the present invention by prioritising an activation of an exhaust braking system before the activation of other auxiliary braking systems. For example, it is common that vehicles are equipped with an auxiliary braking system in the form of e. g. a retarder braking system or other auxiliary braking system separate from the exhaust braking system, which may be activated when needed by the vehicle's driver, or alternatively by the vehicle's control systems, in order to provide a braking action and thus to relieve the vehicle's braking system.

According to the present invention, by first activating the vehicle's exhaust braking system when a request for activation of the auxiliary braking system, which is separate from the exhaust braking system, is noted, the heating of the exhaust stream which the exhaust braking system gives rise to, may be used to maintain a desired temperature in the subsequent after-treatment system. Since a braking force must be applied anyway, the heating of the exhaust stream, and thus of the after-treatment system, is "free" in this context. When subsequently the driving force requirement increases again, because the downhill slope is followed by an uphill slope, the after-treatment system will be heated immediately or at least significantly earlier, so that the treatment of the exhaust stream may take place with a reduced risk of undesired exhausts.

Further characteristics of the present invention and advantages thereof will be described in the detailed description of example embodiments set out below and the enclosed drawings.

### Brief description of drawings

- Fig. 1A: shows schematically a vehicle in which the present invention may be used.
- Fig. 1B: shows a control device in the control system for the vehicle shown in Fig. 1.
- Fig. 2: shows the after-treatment system in more detail for the vehicle shown in Fig. 1.
- Fig. 3: shows an example embodiment according to the present invention.
- Fig. 4: shows an alternative example embodiment according to the present invention.

### Detailed description of embodiments

The term "auxiliary braking system" means the different braking systems which may occur in vehicles in addition to the customary travel (wheel) brake system. Such auxiliary braking systems may e.g. consist of exhaust braking systems, retarder braking systems, engine braking systems, compression braking systems, electromagnetic braking systems etc.

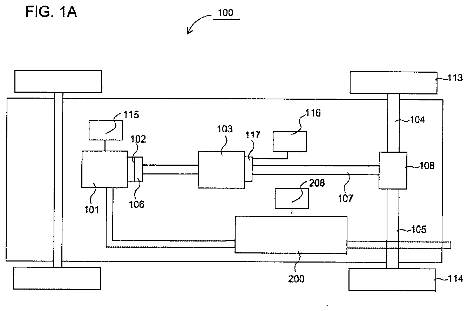

Fig. 1A shows a diagram of a driveline in a vehicle 100 according to an embodiment of the present invention. The vehicle 100, schematically shown in Fig. 1A comprises only one shaft with wheels 113, 114, but the invention is applicable also to vehicles where more than one shaft is equipped with wheels, and vehicles with one or more shafts, such as one or more support shafts. The drive-line comprises one combustion engine 101, which in a customary manner, via an output shaft on the combustion engine 101, usually via a flywheel 102, is connected to a gearbox 103 via a clutch 106.

The combustion engine 101 is controlled by the vehicle's control system via a control device 115. Likewise, the clutch 106, which may consist of e.g. an automatically controlled clutch, as well as the gearbox 103 are controlled by the vehicle's control system with the help of one or more applicable control devices (not shown). Naturally, the vehicle's driveline may also be of another type, such as a type with a conventional automatic gearbox, or a type with a manual gearbox etc.

An output shaft 107 from the gearbox 103 drives the wheels 113, 114 via a final drive 108, such as a customary differential, and drive shafts 104, 105 connected to said final drive 108.

The vehicle 100 also comprises different braking systems, such as a customary travel braking system and a retarder braking system 117. The travel braking system is controlled in the example displayed by the vehicle's control system with the help of a brake control device 116, which sends signals, in a prior art manner, to e. g. the regulator(s) which regulate(s) the braking force in the braking system.

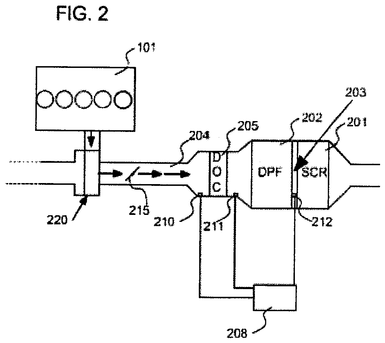

The brake control device 116 also controls, in the example displayed, other braking systems in the vehicle, such as e. g. the retarder braking system 117 and an exhaust braking system 215, which is displayed in fig. 2. The exhaust braking system 215 is arranged downstream of the combustion engine 101 and applies a controllable throttling of the exhaust stream, so that this throttling gives rise to a back pressure in the combustion engine 101, which in turn is braked by this back pressure, and the vehicle's 101 driving wheels 113, 114 are subjected to a braking force via the combustion engine's output shaft. The brake control device 116 may also control other auxiliary braking systems in the vehicle.

Based on commands initiated by the vehicle's driver or other control devices, the control device 116 sends control signals to suitable system modules for a request of the desired braking force. Auxiliary braking systems may normally be arranged to be controlled directly by the driver, e.g. via a lever or a pedal, where the pedal or lever may be directly connected to another control device which sends information to e.g. an auxiliary braking control device, such as a retarder system. According to the present invention, the exhaust braking system may be activated instead of the auxiliary braking system, exemplified below by a retarder braking system, even though the driver explicitly requests activation of a certain auxiliary braking system.

In relation to the auxiliary braking systems, such as a retarder braking system 117, these may be arranged on the gearbox 103's output shaft, e.g. mounted in the gearbox 103's rear edge, where the braking force may be achieved by use of e.g. electrical, hydraulic or magnetic braking of the gearbox's output shaft and thus also of the vehicle's driving wheels 113, 114.

The vehicle 100 also comprises an exhaust system with an after-treatment system 200 for treatment (purification) of exhaust emissions resulting from combustion in the combustion chamber (e.g. cylinders) of the combustion engine 101.

One example of an after-treatment system 200 is shown in more detail in Fig. 2. The figure shows the combustion engine 101 of the vehicle 100, where the exhaust generated by the combustion (the exhaust stream) is led via a turbocharger 220. In turbo engines, the exhaust stream resulting from the combustion often drives a turbocharger, which in turn compresses the incoming air to the cylinders' combustion. Alternatively, the turbocharger may e.g. be of compound type. The function of various types of turbochargers is well-known, and is therefore not described in any detail herein. The exhaust stream is subsequently led via a pipe 204 (indicated with arrows) to a diesel particulate filter (DPF) 202, which in a prior art manner catches soot particles in the exhaust stream, via a diesel oxidation catalyst (DOC) 205.

The DOC 205 has several functions, and is normally used primarily in the after-treatment to oxidise remaining hydrocarbons and carbon monoxide in the exhaust stream into carbon dioxide and water.

The DOC 205 may also e.g. oxidise nitrogen monoxide (NO) into nitrogen dioxide (NO₂). Additionally, the after-treatment system may comprise more components than indicated in the examples above, or fewer components. For example, the after-treatment system may, as in the present example, comprise a SCR (Selective Catalytic Reduction) catalyst 201 downstream of the particulate filter 202. SCR-catalysts use ammoniac (NH₃), or a combination from which ammoniac may be generated/formed, as an additive to reduce the amount of nitrogen oxides NOₓ in the exhaust stream. Fig. 2 also shows temperature sensors 210-212, and a control device 208, which is arranged for the customary control/monitoring of functions in the after-treatment system 200.

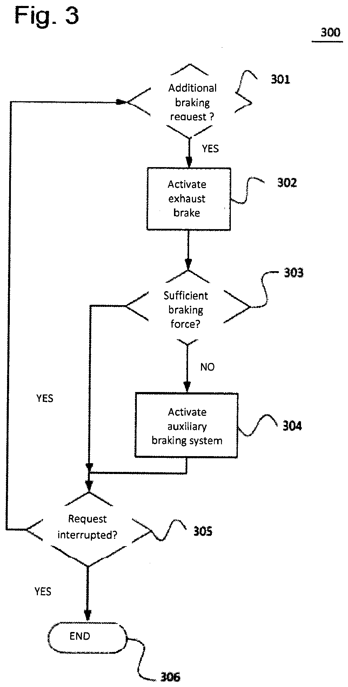

The present invention provides a method to maintain the temperature in the after-treatment system in situations where there is a risk that the temperature may fall to undesirably low levels. In Fig. 3, an example embodiment 300 according to the present invention is shown. The method is carried out according to the present example of the brake control device 116 shown in Fig. 1A-B and Fig. 2.

Generally, control systems in modern vehicles consist of a communications bus system consisting of one or several communications buses to connect a number of electronic control devices (ECU's) such as the control devices, or controllers 115, 208 and different components arranged on the vehicle. Such a control system may comprise a large number of control devices, and the responsibility for a specific function may be distributed among more than one control device.

For the sake of simplicity, Fig. 1A-B shows, in addition to the brake control device 116 in which the present invention is implemented in the embodiment showed, only the control devices 115, 208. The invention may also be implemented in a control device dedicated to the present invention, or entirely or partly in one or several control devices already existing in the vehicle, such as for example the engine control device 115.

The function of control device 116 (or of the control device(s) in which the resent invention is implemented) according to the present invention may depend on, in addition to sensor signals representing a request for activation of an auxiliary braking system, e.g. on signals from e.g. the after-treatment system's control device 208, with control based on a temperature in the exhaust system according to the below. Generally, control devices of the type displayed are normally arranged to receive sensor signals from different parts of the vehicle, as well as from different control devices arranged on the vehicle.

The control is often controlled by programmed instructions. These programmed instructions typically consist of a computer program, which, when it is executed in a computer or control device, causes the computer/control device to carry out the desired steering, as a method step in the process according to the present invention.

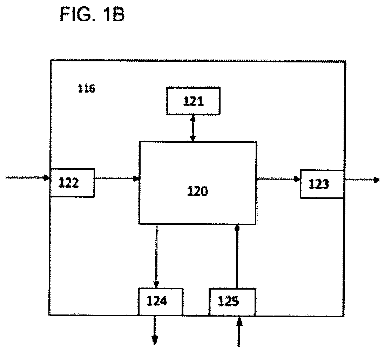

The computer program usually constitutes a part of a computer program product, where the computer program product comprises an applicable storage medium 121 (see Fig. 1B), with the computer program stored on said storage medium 121. Said digital storage medium 121 may e.g. consist of any from the following group: ROM (Read-Only Memory), PROM (Programmable Read-Only Memory), EPROM (Erasable PROM), Flash, EEPROM (Electrically Erasable PROM), a hard disk unit, etc., and may be set up in or in combination with the control device, where the computer program is executed by the control device. By changing the computer program's instructions, the vehicle's behaviour may thus be adjusted in a specific situation.

One example control device (the control device 116) is shown schematically in Fig. 1B, and the control device may in turn comprise a calculation unit 120, which may consist of e.g. a suitable type of processor or microcomputer, e.g. a circuit for digital signal processing (Digital Signal Processor, DSP), or a circuit with a specific function (Application Specific Integrated Circuit, ASIC). The calculation unit 120 is connected to a memory unit 121, which provides the calculation unit 120 with e.g. the stored program code and/or the stored data which the calculation unit 120 needs in order to be able to carry out calculations. The calculation unit 120 is also set up to store interim or final results of calculations in the memory unit 121.

Further, the control device is equipped with devices 122, 123, 124, 125for receipt and sending, respectively, of in and out signals. These input and output signals may contain waveforms, pulses, or other attributes, which may be detected by the devices 122, 125 for the receipt of input signals as information for processing by the calculation unit 120. The devices 123, 124 for sending output signals are arranged to convert the calculation result from the calculation unit 120 to output signals for transfer to other parts of the vehicle's control system and/or the component(s) for which the signals are intended. Each one of the connections to the devices for receipt and sending of input and output signals may consist of one or several cables; or data buses, such as a CAN (Controller Area Network) bus, a MOST (Media Oriented Systems Transport) bus, or any other bus configuration; or of a wireless connection.

Returning to Fig. 3, this shows an example embodiment 300 according to the present invention. The method begins at step 301, where it is established whether an activation of an auxiliary braking system, separate from the exhaust braking system, is requested. If so, the method continues to step 302. The transition from step 301 to step 302 may e.g. be controlled by the fact that activation of a specific auxiliary braking system is requested, or that activation of a random auxiliary braking system or several auxiliary braking systems is requested, as long as this request consists of a request for activation of an auxiliary braking system which is separate from the exhaust braking system 215of the vehicle 100, according to the above.

The request may e.g. be arranged to be carried out by the driver of the vehicle 100, e.g. by manoeuvring an applicable control such as a lever, steering wheel, pedal etc. The request may also e.g. be controlled by a function in the vehicle's control system, such as e.g. a cruise control function. According to the present example, an activation of the retarder braking system 117 is requested.

When it is thus concluded in step 301 that activation of the retarder braking system 117 is requested, the method continues to step 302 where, instead of the requested retarder braking system 117 being activated, the exhaust braking system 215 is activated. According to the present invention the exhaust braking system is thus activated even though an activation of another braking system has actually been requested. On a request for activation of an auxiliary brake, a specific braking force is also usually requested. At step 302, the exhaust braking system is therefore activated to an extent corresponding to the braking force which was requested at step 301. If the requested braking force exceeds the maximum braking force which the exhaust braking system may deliver, the exhaust braking system is activated so that a maximum, or applicable as per the below, exhaust braking force is obtained.

The method then continues to step 303, where it is established whether the braking force generated by the exhaust braking system 215 is sufficient for the requested braking force to be obtained. If so, the method continues to step 305 according to the below. If the braking force generated by the exhaust braking system 215 is insufficient, the method continues to step 304, where the applicable auxiliary braking system separate from the exhaust braking system, preferably the retarder braking system 117 requested at step 301, is activated to such an extent that the total braking force requested is obtained, i.e. in the present example the retarder braking system 117 contributes with the additional braking force required in addition to the maximum exhaust braking force. According to one embodiment, the exhaust braking system does not need to be activated to a maximum, but may be activated to an applicable extent, and the retarder braking system may then contribute with the remaining braking force.

This may also be the case with step 302, i.e. even if the exhaust braking system 215 could provide the entire braking force requested, there may still be situations where the exhaust braking system 215 is only partly activated and the remaining braking force is thus provided by the retarder braking system 117, even though in practice the exhaust braking system 215 could handle the total amount of braking force requested. The reason for this may be e.g. that the reduced exhaust braking force is still sufficient to maintain the temperature in the after-treatment system at the desired level. When the retarder braking system 117 has been activated, the method continues to step 305, where it is established whether a braking force is still requested.

As long as a braking force is still requested, the method returns to step 301 for potential adjustment of the braking force applied. When it is established at step 305 that a braking force is no longer requested, the method is completed at step 306. The method shown in Fig. 3 may also be arranged to be interrupted by an overall function as soon as it is e.g. concluded that a braking force is no longer requested.

By first activating the exhaust braking system according to the present invention, the heat development which the exhaust braking system gives rise to when the exhaust stream is throttled, may be used to heat the after-treatment system 200, whereby the after-treatment system 200 on a subsequent driving force request will be able to handle the exhaust stream in the desired way to a larger extent. Thus, with the help of the present invention, it may be avoided that an essentially untreated exhaust stream leaves the vehicle with a degraded function as a result, in situations where the after-treatment system has been cooled down even though the vehicle as such may have been in operation for a long time.

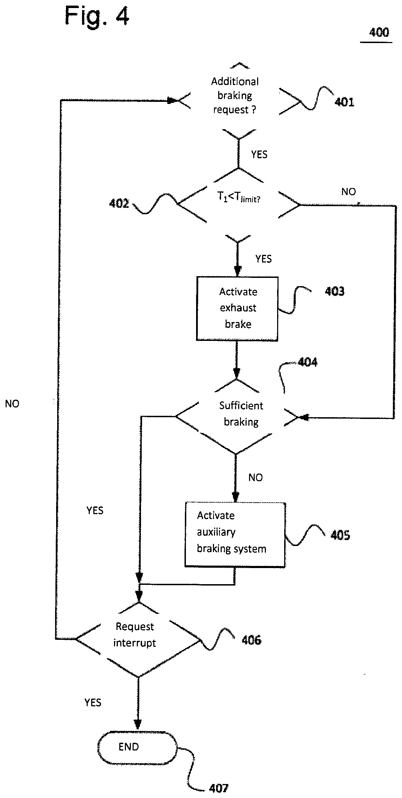

According to one embodiment, the present invention is applied for all requests of activation of an auxiliary braking system, separate from the exhaust braking system. According to another embodiment, exemplified in Fig. 4, a method 400 is provided where the exhaust braking system is activated primarily only if some applicable criterion is met.

The method 400 shown in Fig. 4 begins at step 401, which corresponds to 301 in Fig. 3, i.e. it is established whether a braking force from an auxiliary braking system separate from the exhaust braking system is requested, in the present example the retarder braking system 117. If so, the method continues to step 402. At step 402 it is established whether a first temperature T₁ in the exhaust system and/or any applicable place in the after-treatment system 200 is below any applicable limit value Tₗᵢₘᵢₜ₁. As long as this is not the case, the method continues to step 404 in order to be followed by activation of the retarder braking system 117 in step 405, while the method continues to step 403 if the temperature is below the limit value Tₗᵢₘᵢₜ₁. The steps 403-407 correspond entirely to the steps 302-306 in Fig. 3.

The temperature Tₗᵢₘᵢₜ₁ may e.g. be such a high temperature that it is likely that the temperature in the after-treatment system 200 will not fall to an undesirable level even if the exhaust braking system is not activated. This may e.g. be the case at the top of a long and steep uphill slope where the combustion engine, in particular for a heavily loaded vehicle, has been forced to work hard during a longer period, with a high exhaust stream temperature, as a consequence. If e. g. a retarder braking system force is then requested on a subsequent downhill slope, the temperature may be deemed to be so high that no activation of the exhaust braking system is required, since the temperature may be deemed to exceed an applicable limit value at the end of the downhill slope even though the exhaust braking system is not activated.

Since the method reverts to step 401 from step 406, the temperature may be established continuously, so that the exhaust braking system may be activated according to step 403 (which corresponds to step 302) as soon as the temperature Tifalls below the temperature limit value Tₗᵢₘᵢₜ₁, which e.g. may be the case on a longer downhill slope, even in cases where the retarder braking system may have been activated first. The temperature T₁ may be established in an applicable manner, e. g. with the help of a temperature sensor arranged in the exhaust system/after-treatment system, such as e. g. one of the temperature sensors 210-212 showed above. The temperature T₁ may also represent a calculated value for any applicable place in the after-treatment system, such as e.g. a calculated temperature for a catalyst, where the temperature T₁ may be calculated with the help of a model of the after-treatment system together with e.g. the prevailing exhaust stream flow, and an applicable temperature upstream of the after-treatment system.

The embodiment shown in Fig. 4 thus entails that, depending on the prevailing temperature T₁, activation of the different braking systems will take place in different ways. If the temperature T₁ on a request for activation of the retarder braking system is below the temperature limit Tₗᵢₘᵢₜ₁ the exhaust braking system 215 will be activated directly. If on the other hand the temperature T₁ exceeds the temperature limit Tₗᵢₘᵢₜ₁ when the retarder braking request is carried out, the retarder braking system will be activated, so that the exhaust braking system is activated only when the temperature T₁ falls below the temperature limit Tₗᵢₘᵢₜ₁, which may occur only after a period of braking.

According to yet another embodiment of the present invention, at step 402 it is not established whether the temperature T₁ actually falls below the temperature Tₗᵢₘᵢₜ₁, but whether the temperature T₁ is expected to fall below the temperature limit Tₗᵢₘᵢₜ₁. This may e.g. be established with the help of a cruise control which uses a look function for looking ahead, a so-called "Look Ahead"-function. A "Look-Ahead" cruise control (LACC, Look Ahead Cruise Control) consists of a cruise control that uses knowledge about road sections ahead, in order to adjust the vehicle's speed according to the variations of the road along which the vehicle is travelling. According to one embodiment of the present invention, such data are used to establish whether the exhaust braking system shall be activated instead of the retarder braking system, so that it may be established with the help of the look-ahead cruise control whether the temperature T₁ is expected to fall below the temperature limit Tₗᵢₘᵢₜ₁, with the help of knowledge concerning the topology, curvature, characteristics etc. of the road ahead of the vehicle.

With the help of this look-ahead function, it may be established whether e.g. a downhill slope is so long that the temperature T₁ is expected to fall to an undesirable level, so that the exhaust braking system may e.g. be arranged to be activated directly on e.g. request for activation of the retarder braking system 117 in order to prevent this. Alternatively, this activation may be arranged to be carried out after some applicable time has lapsed, or after an applicable part of the downhill slope has passed. Further, different temperature limits Tₗᵢₘᵢₜ₁ may be used depending on the length of the downhill slope. The exhaust braking system may e.g. be activated at a higher temperature on a longer downhill slope in order to maintain securely the desired temperature if e. g. the braking force request ceases entirely at the end/lower part of the downhill slope.

The present invention thus provides a method to reduce the risk of the temperature in the after-treatment system sinking to such low levels that the exhaust purifications suffer with increased emissions as a result.

Other embodiments of the method and the system according to the invention are available in the patent claims enclosed hereto.

It should also be noted that the system may be modified according to various embodiments of the method according to the invention (and vice versa) and that the present invention is in no way limited to the above described embodiments of the method according to the invention, but pertain to and comprise all embodiments in the scope of the enclosed independent claims.

## Claims

1. Method when driving a vehicle (100), wherein said vehicle (100) comprises a combustion engine (101) and an exhaust system with an after-treatment system (200) for after-treatment of an exhaust stream resulting from said combustion engine (101), wherein said vehicle (100) also comprises an exhaust braking system (215) and at least one first auxiliary braking system (117) separate from said exhaust braking system, **characterised by** the method comprising:
- on request for activation of said first auxiliary braking system (117), at least to activate the said exhaust braking system (215), so that the heating of the exhaust stream which the exhaust braking system gives rise to, is used to maintain a desired temperature in the subsequent after-treatment system.

2. Method according to claim 1, also comprising that, when said vehicle is driven without said first auxiliary braking system (117) being activated:
- at least to activate said exhaust braking system (215) on a request for activation of said first auxiliary braking system (117).

3. Method according to claim 1 or 2, further comprising:
- to establish a representation of a first temperature (T₁) in said exhaust system, and
- based on said first temperature (T₁) - to establish whether at least said exhaust braking system (215) should be activated on a request for activation of said first auxiliary braking system (117).

4. Method according to claim 3, further comprising:
- to compare the first temperature (T₁) with a limit value (Tₗᵢₘᵢₜ₁), and,
- if said first temperature (T₁) falls below the said limit value (Tₗᵢₘᵢₜ₁)at least to activate said exhaust braking system (215) on a request for activation of said first auxiliary braking system (117).

5. Method according to claim 3, further comprising to establish whether said first temperature is expected to fall below a limit value (Tₗᵢₘᵢₜ₁)within a first period of time, and,
- if said first temperature (T₁) is expected to fall below said limit value (Tₗᵢₘᵢₜ₁)within said first period of time-at least to activate said exhaust braking system (215) on a request for activation of said first auxiliary braking system (117).

6. Method according to claim 5, also comprising to establish whether said first temperature (T₁) is expected to fall below said limit value (Tₗᵢₘᵢₜ₁) within said first period of time, based on data concerning the vehicle's (100) expected road section ahead of the vehicle (100).

7. Method according to any of claims 3-6, wherein said first auxiliary braking system is first activated on a request for activation of said first auxiliary braking system (117), and wherein said exhaust braking system is activated when said first temperature (T₁) meets the respective conditions in claims 3-6.

8. Method according to any of the previous claims, also comprising only to activate said exhaust braking system (215) on a request for activation of said first auxiliary braking system (117).

9. Method according to any of the previous claims, also comprising to further activate said first auxiliary braking system (117), if available braking force from said exhaust braking system (215) is below a first braking force.

10. Method according to claim 9, also comprising to further activate the said first auxiliary braking system (117), when a requested braking force on said request for activation of said first auxiliary braking system (117) exceeds the available braking force from said exhaust braking system (215).

11. Method according to any of the previous claims, where said exhaust braking system (215) consists of throttle elements arranged in said exhaust system for controllable throttling of said exhaust stream.

12. Method according to claim 11, where said throttling elements for controllable throttling of said exhaust stream are arranged upstream of at least one component in said after-treatment system (200).

13. Method according to any of the previous claims, also comprising at least to activate said exhaust braking system (215) when a driver of said vehicle (100) requests activation of said first auxiliary braking system (117).

14. Method according to any of claims 1-12, also comprising at least to activate said exhaust braking system (215) when a control system arranged in said vehicle (100) requests activation of said first auxiliary braking system (117) .

15. Method according to any of the previous claims, where said after-treatment system (200) comprises at least one from the group: particulate filter (202), DOC-catalyst, SCR-catalyst.

16. Computer program comprising a program code which, when the said program code is executed in a computer, achieves that the said computer carries out the method according to any of the patent claims 1-15.

17. Computer program product comprising a computer readable medium and a computer program according to patent claim 16, where said computer program is comprised in said computer readable medium.

18. Vehicle (100), where said vehicle (100) comprises a combustion engine (101) and an exhaust system with an after-treatment system (200), for after-treatment of an exhaust stream resulting from said combustion engine (101), wherein said vehicle (100) also comprises an exhaust braking system (215) and at least one auxiliary braking system (117) separate from said exhaust braking system, **characterised by** the vehicle (100) comprises:
- elements adapted to, on request for activation of said first auxiliary braking system (117), at least activate said exhaust braking system (215), so that the heating of the exhaust stream which the exhaust braking system gives rise to, is used to maintain a desired temperature in the subsequent after-treatment system.

19. Vehicle according to claim 18, **characterised by** said first auxiliary braking system consisting of one of the group: retarder braking system, engine braking system, compression braking system, electromagnetic braking system.

## Patentansprüche

1. Verfahren während dem Fahren eines Fahrzeugs (100), wobei das Fahrzeug (100) einen Verbrennungsmotor (101) und ein Abgassystem mit einem Nachbehandlungssystem (200) zur Nachbehandlung eines Abgasstroms umfasst, der aufgrund des Verbrennungsmotors (101) entsteht, wobei das Fahrzeug (100) ferner ein Abgasbremssystem (215) und mindestens ein erstes Hilfsbremssystem (117) getrennt vom Abgasbremssystem umfasst, **dadurch gekennzeichnet, dass** das Verfahren umfasst:
- auf Anfrage zum Aktivieren des ersten Hilfsbremssystems (117), mindestens Aktivieren des Abgasbremssystems (215), sodass das Aufheizen des Abgasstroms, das das Abgasbremssystem hervorruft, dazu genutzt wird, um eine gewünschte Temperatur in dem darauf folgenden Nachbehandlungssystem zu erreichen.

2. Verfahren nach Anspruch 1, zusätzlich umfassend, dass dann, wenn das Fahrzeug ohne Aktivieren des ersten Hilfsbremssystems (117) gefahren wird:
- mindestens Aktivieren des Abgasbremssystems (215) auf Anfrage zum Aktivieren des ersten Hilfsbremssystems (117).

3. Verfahren nach einem der Ansprüche 1 oder 2, ferner umfassend:
- Bestimmen einer Angabe einer ersten Temperatur (T₁) in dem Abgassystem, und
- basierend auf der ersten Temperatur (T₁) - Bestimmen, ob wenigstens das Abgasbremssystem (215) auf Anfrage zum Aktivieren des ersten Hilfsbremssystems (117) aktiviert werden sollte.

4. Verfahren nach Anspruch 3, ferner umfassend:
- Vergleichen der ersten Temperatur (T₁) mit einem Grenzwert (Tₗᵢₘᵢₜ₁), und,
- wenn die erste Temperatur (T₁) unter den Grenzwert (Tₗᵢₘᵢₜ₁) fällt, mindestens Aktivieren des Abgasbremssystems (215) auf eine Anfrage zum Aktivieren des ersten Hilfsbremssystems (117).

5. Verfahren nach Anspruch 3, ferner umfassend ein Bestimmen, ob die erste Temperatur voraussichtlich unter den Grenzwert (Tₗᵢₘᵢₜ₁) innerhalb einer ersten Zeitdauer fällt, und,
- wenn die erste Temperatur (T₁) voraussichtlich unter den Grenzwert (Tₗᵢₘᵢₜ₁) innerhalb der ersten Zeitdauer fällt - mindestens Aktivieren des Abgasbremssystems (215) auf eine Anfrage zum Aktivieren des ersten Hilfsbremssystems (117).

6. Verfahren nach Anspruch 5, ferner umfassend ein Bestimmen, ob die erste Temperatur (T₁) voraussichtlich unter den Grenzwert (Tₗᵢₘᵢₜ₁) innerhalb der ersten Zeitdauer fällt, basierend auf Daten bezüglich dem erwarteten Straßenabschnitt des Fahrzeugs (100), der vor dem Fahrzeug (100) liegt.

7. Verfahren nach einem der Ansprüche 3-6, wobei das erste Hilfsbremssystem erstmalig auf eine Anfrage zum Aktivieren des ersten Hilfsbremssystems (117) aktiviert wird, und wobei das Abgasbremssystem aktiviert wird, wenn die erste Temperatur (T₁) die entsprechenden Bedingungen nach Ansprüchen 3-6 erfüllt.

8. Verfahren nach einem der vorhergehenden Ansprüche, ferner umfassend, dass das Abgasbremssystem (215) nur auf Anfrage zum Aktivieren des ersten Hilfsbremssystems (117) aktiviert wird.

9. Verfahren nach einem der vorhergehenden Ansprüche, ferner umfassend ein weiteres Aktivieren des ersten Hilfsbremssystems (117), wenn die verfügbare Bremskraft des Abgasbremssystems (215) unterhalb einer ersten Bremskraft liegt.

10. Verfahren nach Anspruch 9, ferner umfassend ein weiteres Aktivieren des ersten Hilfsbremssystems (117), wenn eine angefragte Bremskraft auf die Anfrage zum Aktivieren des ersten Hilfsbremssystems (117) die verfügbare Bremskraft des Abgasbremssystems (215) überschreitet.

11. Verfahren nach einem der vorhergehenden Ansprüche, wobei das Abgasbremssystem (215) Drosselelemente umfasst, die zum steuerbaren Drosseln des Abgasstroms in dem Abgassystem angeordnet sind.

12. Verfahren nach Anspruch 11, wobei die Drosselelemente zum steuerbaren Drosseln des Abgasstroms stromaufwärts mindestens einer Komponente in dem Nachbehandlungssystem (200) angeordnet sind.

13. Verfahren nach einem der vorhergehenden Ansprüche, ferner umfassend mindestens ein Aktivieren des Abgasbremssystems (215), wenn ein Fahrer des Fahrzeugs (100) das Aktivieren des ersten Hilfsbremssystems (117) anfragt.

14. Verfahren nach einem der Ansprüche 1-12, ferner umfassend mindestens ein Aktivieren des Abgasbremssystems (215), wenn ein Steuersystem, das in dem Fahrzeug (100) angeordnet ist, das Aktivieren des ersten Hilfsbremssystems (117) anfragt.

15. Verfahren nach einem der vorhergehenden Ansprüche, wobei das Nachbehandlungssystem (200) mindestens eines der Gruppe umfasst: Partikelfilter (202), DOC-Katalysator, SCR-Katalysator.

16. Computerprogramm umfassend einen Programmcode, der dann, wenn der Programmcode auf einem Computer ausgeführt wird, dazu eingerichtet ist, dass der Computer das Verfahren nach einem der Ansprüche 1-15 ausführt.

17. Computerprogrammprodukt umfassend ein computerlesbares Medium und ein Computerprogramm nach Anspruch 16, wobei das Computerprogramm von dem computerlesbaren Medium umfasst ist.

18. Fahrzeug (100), wobei das Fahrzeug (100) einen Verbrennungsmotor (101) und ein Abgassystem mit einem Nachbehandlungssystem (200) zur Nachbehandlung eines Abgasstroms umfasst, der aufgrund des Verbrennungsmotors (101) entsteht, wobei das Fahrzeug (100) ferner ein Abgasbremssystem (215) und mindestens ein erstes Hilfsbremssystem (117) getrennt vom Abgasbremssystem umfasst, **dadurch gekennzeichnet, dass** das Fahrzeug (100) umfasst:
- Elemente, die dazu eingerichtet sind, auf Anfrage zum Aktivieren des ersten Hilfsbremssystems (117), mindestens das Abgasbremssystems (215) zu aktivieren, sodass das Aufheizen des Abgasstroms, das das Abgasbremssystem hervorruft, dazu genutzt wird, um eine gewünschte Temperatur in dem darauf folgenden Nachbehandlungssystem zu erreichen.

19. Fahrzeug nach Anspruch 18, **gekennzeichnet durch** das erste Hilfsbremssystem, das eines der Gruppe umfasst: Retarderbremssystem, Motorbremssystem, Kompressionsbremssystem, elektromagnetisches Bremssystem.

## Revendications

1. Procédé lors de la propulsion d'un véhicule (100), le véhicule (100) comprenant un moteur à combustion (101) et un système d'échappement avec un système de post-traitement (200) pour un post-traitement d'un flux d'échappement provenant du moteur à combustion (101), où le véhicule (100) comprend également un système de frein moteur (215) et au moins un premier système auxiliaire de freinage (117) distinct du système de frein moteur, **caractérisé par le fait que** le procédé comprend :
- suite à une demande d'activation du premier système auxiliaire de freinage (117), au moins activer le système de frein moteur (215) afin que la chaleur du flux d'échappement engendrée par le système de frein moteur soit utilisée pour maintenir une température souhaitée dans le système de post-traitement qui suit.

2. Procédé selon la revendication 1, comprenant également, lorsque le véhicule est propulsé sans que le premier système auxiliaire de freinage (117) ne soit activé :
- au moins activer le système de frein moteur (215) suite à une demande d'activation du premier système auxiliaire de freinage (117).

3. Procédé selon la revendication 1 ou 2, comprenant en outre :
- établir une représentation d'une première température (T₁) dans le système de frein moteur et
- sur la base de cette première température (T₁),
- établir si au moins le système de frein moteur (215) doit être activé suite à une demande d'activation du premier système auxiliaire de freinage (117).

4. Procédé selon la revendication 3, comprenant en outre :
- comparer la première température (T₁) avec une valeur limite (Tₗᵢₘᵢₜ₁) et
- si la première température (T₁) tombe en-dessous de la valeur limite (Tₗᵢₘᵢₜ₁) au moins activer le système de frein moteur (215) suite à une demande d'activation du premier système auxiliaire de freinage (117).

5. Procédé selon la revendication 3, comprenant en outre établir si la première température tend à tomber en-dessous d'une valeur limite (Tₗᵢₘᵢₜ₁) dans un premier laps de temps et
- si la première température (T₁) tend à tomber en-dessous de la valeur limite (Tₗᵢₘᵢₜ₁) dans le premier laps de temps, au moins activer le système de frein moteur (215) suite à une demande d'activation du premier système auxiliaire de freinage (117).

6. Procédé selon la revendication 5, comprenant en outre établir sur la base de données concernant la partie de parcours du véhicule (100) qui est devant le véhicule (100), si la première température (T₁) tend à tomber en-dessous d'une valeur limite (Tₗᵢₘᵢₜ₁) dans le premier laps de temps.

7. Procédé selon l'une des revendications 3 à 6, **caractérisé en ce que** le premier système auxiliaire de freinage est activé d'abord suite à une demande d'activation du premier système auxiliaire de freinage (117), et **en ce que** le système de frein moteur est activé lorsque la première température (T₁) remplit les conditions posées dans les revendications 3 à 6.

8. Procédé selon l'une des revendications précédentes, comprenant en outre activer le système de frein moteur (215) uniquement suite à une demande d'activation du premier système auxiliaire de freinage.

9. Procédé selon l'une des revendications précédentes, comprenant en outre activer le premier système auxiliaire de freinage (117) aussi lorsque la force de freinage disponible du système de frein moteur (215) est en-dessous d'une première force de freinage.

10. Procédé selon la revendication 9, comprenant en outre activer le premier système auxiliaire de freinage (117) aussi lorsqu'une force de freinage demandée dans la demande d'activation du premier système auxiliaire de freinage (117) dépasse la force de freinage disponible du système de frein moteur (215).

11. Procédé selon l'une des revendications précédentes, **caractérisé en ce que** le système de frein moteur (215) consiste d'éléments d'étranglement agencés dans le système de frein moteur pour étrangler, de manière contrôlée, le flux d'échappement.

12. Procédé selon la revendication 11, **caractérisé en ce que** les éléments pour un étranglement contrôlé du flux d'échappement sont disposés en amont de ladite au moins une composante dans le système de post-traitement (200).

13. Procédé selon l'une des revendications précédentes, comprenant en outre au moins activer le système de frein moteur (215) lorsqu'un conducteur du véhicule (100) demande l'activation du premier système auxiliaire de freinage (117).

14. Procédé selon l'une des revendications 1 à 12, comprenant en outre au moins activer le système de frein moteur (215) lorsqu'un système de contrôle agencé dans le véhicule (100) demande l'activation du premier système auxiliaire de freinage (117).

15. Procédé selon l'une des revendications précédentes, **caractérisé en ce que** le système de post-traitement (200) comprend au moins un du groupe filtre de particules (202), catalyseur DOC, catalyseur SCR.

16. Programme d'ordinateur comprenant un code de programme informatique qui, lorsque le code de programme informatique est mis en oeuvre dans un ordinateur, fait en sorte que le procédé selon l'une des revendications 1 à 15 soit mis en oeuvre.

17. Produit de programme d'ordinateur comprenant un moyen lisible par ordinateur et un programme d'ordinateur selon la revendication 16, **caractérisé en ce que** le programme d'ordinateur est compris dans le moyen lisible par ordinateur.

18. Véhicule (100), le véhicule (100) comprenant un moteur à combustion (101) et un système d'échappement avec un système de post-traitement (200) pour un post-traitement d'un flux d'échappement provenant du moteur à combustion (101), où le véhicule (100) comprend également un système de frein moteur (215) et au moins un premier système auxiliaire de freinage (117) distinct du système de frein moteur,
**caractérisé en ce que** le véhicule (100) comprend :
- des éléments adaptés pour, suite à une demande d'activation du premier système auxiliaire de freinage (117), au moins activer le système de frein moteur (215) afin que la chaleur du flux d'échappement engendrée par le système de frein moteur soit utilisée pour maintenir une température souhaitée dans le système de post-traitement qui suit.

19. Véhicule selon la revendication 18, **caractérisé en ce que** le premier système auxiliaire de freinage consiste de l'un du groupe : système de freinage à ralentisseur, frein moteur, frein à air comprimé, système de freinage électromagnétique.
